# EUROPEAN PATENT SPECIFICATION

(11) **EP 4 345 717 B1**
(45) Date of publication and mention of the grant of the patent: **17.06.2026**
(21) Application number: 23195607.9
(22) Date of filing: 06.09.2023
(51) Int. Cl.: G06Q 10/087

(54) **DRUG SHORTAGE PREDICTION IN A DRUG SUPPLY CHAIN INFORMATION SHARING NETWORK**
VORHERSAGE VON ARZNEIMITTELMANGEL IN EINEM NETZWERK ZUR GEMEINSAMEN NUTZUNG VON INFORMATIONEN ÜBER ARZNEIMITTELVERSORGUNGSKETTEN
PRÉDICTION DE PÉNURIE DE MÉDICAMENT DANS UN RÉSEAU DE PARTAGE D'INFORMATIONS DE CHAÎNE D'APPROVISIONNEMENT EN MÉDICAMENT

(30) Priority: 30.09.2022 FR 2210009
(43) Date of publication of application: 03.04.2024
(73) Proprietor: Tracelink, Inc., Wilmington, MA 01887 (US)
(72) Inventor: GASHGASH, Ahmed Almostafa, Dublin, OH, 43016 (US); GUPTA, Abhishek, Revere, MA, 02151 (US); GARBUZ, Alexander, Reading, MA, 01867 (US); MILLS, James, Wilmington, MA, 01887 (US)
(74) Representative: Bringer IP

(56) References cited:
- US-A1- 2020 320 470
- US-A1- 2021 192 346
- US-A1- 2021 263 945

## Description

### BACKGROUND OF THE INVENTION

### Field of the Invention

The present invention relates to the technical field of supply chain shortage prediction and more particularly to predicting product shortage in a pharmaceutical supply chain.

### Description of the Related Art

The pharmaceutical supply chain is the means through which prescription medicines are delivered to patients. Pharmaceuticals originate in manufacturing sites from which the pharmaceuticals are transferred to wholesale distributors and then stocked at retail, mail-order, and other types of pharmacies. Thereafter, stocked pharmaceuticals are processed by pharmacy benefit management companies and dispensed by pharmacies for ultimate consumption by different patient-consumers. Given that pharmaceuticals are drugs, most nations regulate the manufacture, distribution and sale of pharmaceuticals for which the detailed tracking of drugs throughout the supply chain remains of central importance.

In the modern era, drug supply chain management has become a task for enterprise computing. In this regard, enterprise computing as a tool provides cradle to grave tracking of pharmaceuticals from the time of manufacture to the time of consumption. It is to be recognized, however, that with the over four billion prescriptions filled for prescription drugs in the United States alone in the past year, tracking the lifecycle of a prescription drug is a task that only could be performed by an advanced computing system.

To compound matters, drug shortages appear from time to time. Little can be done to avoid a drug shortage absent an advance indication from the pharmaceutical supply chain, however. As such, it has become customary to approach a drug shortage implicating a drug of a particular national drug code (NDC) through remedial measures such as increasing the manufacture of the implicated drug, or releasing from inventory surplus stores of the implicated drug. Obviously, an advance indication of an impending drug shortage would be preferable to the aforesaid reactionary approach.

However, to accurately predict an impending drug shortage for a drug of particular NDC requires the total cooperation of all members of the pharmaceutical supply chain and an excessive amount of past historical data from which patterns indicative of an impending drug shortage can be recognized. At present, expecting the complete digital integration of the inventory levels of each member of the pharmaceutical supply chain is simply not realistic. Further, the amount of data available in respect to the root cause of a drug shortage rests solely within the limited publication of lists of drug shortage events. A lack of the requisite volume of data in regard to the transactions in the pharmaceutical supply chain leading to a drug shortage prevents the computation of a reasonably accurate predictive model.

US 2020/320470 A1 discloses managing pharmaceutical inventory and ordering processes, involving determining a medication need for an ordering location and identifying multiple drug products. US 2021/192346 A1 refers to prepare a classifier to recognize an exception event and drug identification and triggering application, involving a saving parameter for training a first set of drug classifiers and exception classifiers in a tangible machine readable memory.

### BRIEF SUMMARY OF THE INVENTION

Embodiments of the present invention address technical deficiencies of the art in respect to the advance determination of an impending drug shortage. To that end, embodiments of the present invention provide for a novel and non-obvious method for drug shortage prediction. Embodiments of the present invention also provide for a novel and non-obvious computing device adapted to perform the foregoing method. Finally, embodiments of the present invention provide for a novel and non-obvious data processing system incorporating the foregoing device in order to perform the foregoing method.

In one embodiment of the invention, a drug shortage prediction method includes an establishment of a communicative coupling between a drug shortage prediction module executing by a processor of a host computing device, and a data bus, such as a message queue, of a digital supply network computing platform that supports supply chain information sharing by different enterprise computing nodes of different corresponding participants to a pharmaceutical supply chain. The method further includes both defining a classifier data structure in memory of the host computing device, for instance a decision tree model, or a deep neural network. The method yet further includes the loading into the memory of the host computing device of a listing of different drug shortage events at different times in association with different drugs. In this regard, each corresponding one of the different drugs can be represented in the listing by an NDC that specifies a labeler of the corresponding one of the different drugs, an identity of the corresponding one of the different drugs and a quantity of the corresponding one of the different drugs in a related packaging. The message queue is processing messages between the different enterprise computing nodes of the digital supply network platform.

Subsequently, the drug shortage prediction module reads transactions between ones of the nodes on the data bus over different periods of time, with the transactions each indicating a change in custody of a particular one of the drugs, for example the receipt of the particular one of the drugs by a particular dispensary or shipment of the particular one of the drugs by a manufacturer of the particular one of the drugs. As such, the module correlates ones of the drug shortage events with ones of the transactions at a specified duration of time preceding the drug shortage events. Thereafter, the module trains the classifier with the correlated ones of the transactions which will have been annotated as giving rise to the drug shortage events when the correlated ones of the transactions are observed at the specified duration of time preceding the drug shortage events.

Once the classifier has been trained, the drug shortage prediction module queries the classifier with newly observed transactions on the data bus so that in response to the querying, the drug shortage prediction module receives from the classifier a likelihood that a drug shortage event for a specific one of the drugs will occur at the specified duration of time following the newly observed transactions. Finally, the drug shortage prediction module directs the display of the likelihood in a user interface presented by the digital supply network computing platform.

In one aspect of the embodiment, the module additionally correlates in the memory of the device additional ones of the drug shortage events with additional ones of the transactions at a different duration of time preceding the drug shortage events. The module further trains the classifier with the additionally correlated ones of the additional ones of the transactions annotated as giving rise to the drug shortage events when the additionally correlated ones of the additional ones of the transactions are observed at the different duration of time preceding the drug shortage events. Consequently, the querying of the classifier with newly observed transactions on the data bus results in a receipt of a likelihood that a drug shortage event will occur at either the specified duration of time following the newly observed transactions or at the different duration of time following the newly observed transactions.

In another embodiment of the invention, a data processing system is adapted for drug shortage prediction. The system includes a host computing platform of one or more computers, each with memory and one or processing units including one or more processing cores. The system additionally includes a digital supply network computing platform supporting supply chain information sharing by different enterprise computing nodes of different corresponding participants to a pharmaceutical supply chain. The digital supply network computing platform in turn includes a data bus, such as a message queue, that is communicatively coupled to the host computing platform. The system further includes a classifier data structure defined in memory of the host computing device and a listing stored in the memory of different drug shortage events at different times in association with different drugs.

Finally, the system includes a drug shortage prediction module executing by the one or more processing units. The module includes computer program instructions enabled during execution to read on the data bus, over different periods of time, transactions between ones of the nodes each indicating a change in custody of a particular one of the drugs, for example the receipt of the particular one of the drugs by a particular dispensary or shipment of the particular one of the drugs by a manufacturer of the particular one of the drugs. The program instructions additionally are enabled to correlate in the memory of the device, ones of the drug shortage events with ones of the transactions at a specified duration of time preceding the drug shortage events. The program instructions further are enabled to train the classifier with the correlated ones of the transactions annotated as giving rise to the drug shortage events when the correlated ones of the transactions are observed at the specified duration of time preceding the drug shortage events.

Subsequently, the program instructions query the classifier with newly observed transactions on the data bus and receive in response to the querying, a likelihood that a drug shortage event for a specific one of the drugs will occur at the specified duration of time following the newly observed transactions. Finally, the program instructions are enabled to direct the display of the likelihood in a user interface presented by the digital supply network computing platform. In this way, the technical deficiencies of the prediction of a drug shortage for a particular NDC specified drug are overcome owing to mining of a large set of transaction data across all of the nodes of a pharmaceutical supply chain from which a pattern indicative of an impending drug shortage can be predicted at different intervals of time into the future.

Additional aspects of the invention will be set forth in part in the description which follows, and in part will be obvious from the description, or may be learned by practice of the invention. The aspects of the invention will be realized and attained by means of the elements and combinations particularly pointed out in the appended claims. It is to be understood that both the foregoing general description and the following detailed description are exemplary and explanatory only and are not restrictive of the invention, as claimed.

### BRIEF DESCRIPTION OF THE SEVERAL VIEWS OF THE DRAWINGS

The accompanying drawings, which are incorporated in and constitute part of this specification, illustrate embodiments of the invention and together with the description, serve to explain the principles of the invention. The embodiments illustrated herein are presently preferred, it being understood, however, that the invention is not limited to the precise arrangements and instrumentalities shown, wherein:
Figure 1 is a pictorial illustration reflecting different aspects of a process of drug shortage prediction;
Figure 2 is a block diagram depicting a data processing system adapted to perform one of the aspects of the process of Figure 1; and,
Figure 3 is a flow chart illustrating one of the aspects of the process of Figure 1.

### DETAILED DESCRIPTION OF THE INVENTION

Embodiments of the invention provide for drug shortage prediction. In accordance with an embodiment of the invention, the transaction signals of the movement of different drugs across a pharmaceutical supply chain are monitored within a data bus of a digital supply chain network supporting communications and transactions amongst the different actors as different nodes of the pharmaceutical supply chain. A timing of occurrence of each transaction indicating a receipt of each of the different drugs is correlated to the publication of drug shortages for ones of the drugs so that a classifier may be trained to recognize the correlation. Thereafter, as the transactions are monitored on the data bus, the transactions can be provided to the classifier as a query input in order to receive in response from the classifier, a likelihood that a drug shortage can be expected for a particular one of the drugs at a certain time in the future.

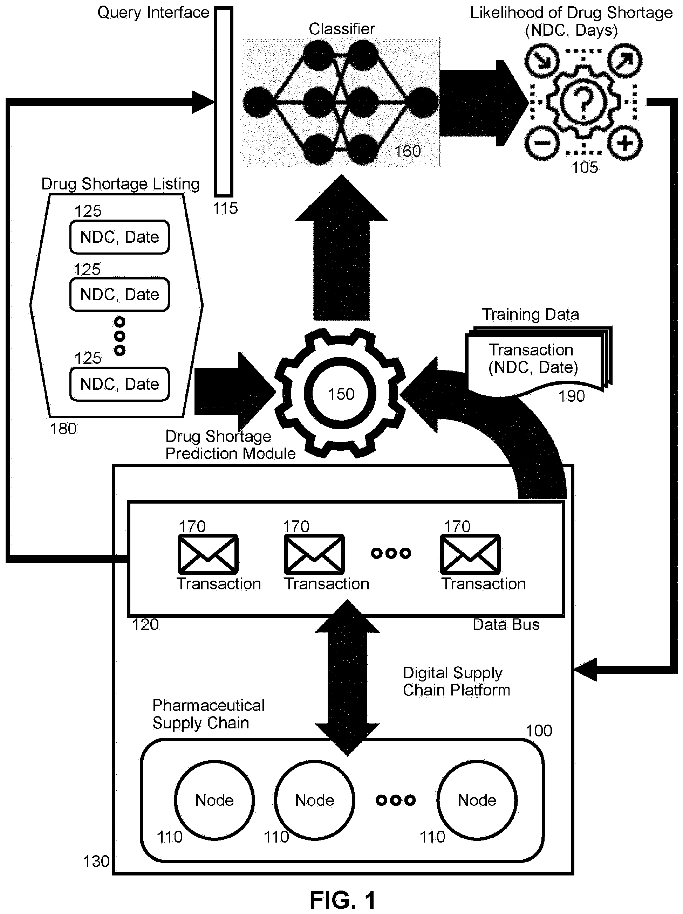

In illustration of one aspect of the embodiment, Figure 1 pictorially shows a process of drug shortage prediction. As shown in Figure 1, different computing nodes 110 of a pharmaceutical supply chain 100 participating in a digital supply chain platform 130 post transactions 170 to a data bus 120 such as a message queue for the digital supply chain platform 130 encapsulating transaction information including transactions indicative of change of custody of different drugs amongst the nodes 110. Each of the transactions 170 encapsulates an NDC code indicating a label, a drug identifier and a packaging quantity. Drug shortage prediction module 150 monitors the transactions 170 in the data bus 120 and extracts the transactions pertaining to change of custody into a training data set 190.

Thereafter, the drug shortage prediction module 150 correlates the transactions 170 of the training data set 190 to drug shortage events 125 included in a drug shortage listing 180. The correlation between each label implicated by an NDC code amongst the transactions 170 of the training data set 190 and a corresponding one of the drug shortage events 125 includes a number of days lapsed from each of the transactions 170 in the training data set 190 referencing the label implicated by the NDC code and a date of a corresponding one of the drug shortage events 125 for the label. The drug shortage prediction module 150 then trains classifier 160, for instance a decision tree model or a deep neural network, using the training data 190 annotated according to the correlation to drug shortage events 125 of the drug shortage listing 180 including a period of time lapsed from the transactions 170 of the training data set 190 to the occurrence of the corresponding ones of the drug shortage events 125.

Once the drug shortage prediction module 150 has completed training of the classifier 160, the transactions 170 monitored in the data bus 120 are fed to the classifier 160 through a query interface 115. The classifier 160 in response produces a prediction 105 as to the likelihood of a drug shortage after a lapsed period of time for a corresponding label expressed by the ones of the transactions 170 provided through the query interface 115. Optionally, the drug shortage prediction module 150 can train multiple different instances of the classifier 160 for different lapsed periods of time so that the same set of the transactions 170 provided through the query interface 115 to each of the different instances of the classifier 160 may produce different instances of the prediction 105 for different specific dates in the future depending upon the lapsed period of time of a corresponding instance of the classifier 160. To the extent that an instance of the classifier 160 produces a prediction 105 indicating a likelihood of a drug shortage for a particular label, the drug shortage prediction module 150 can direct the digital supply chain platform 130 to present the prediction 105 in a user interface to the digital supply chain platform 130 or to insert the prediction 105 as one of the transactions 170 on the data bus 120.

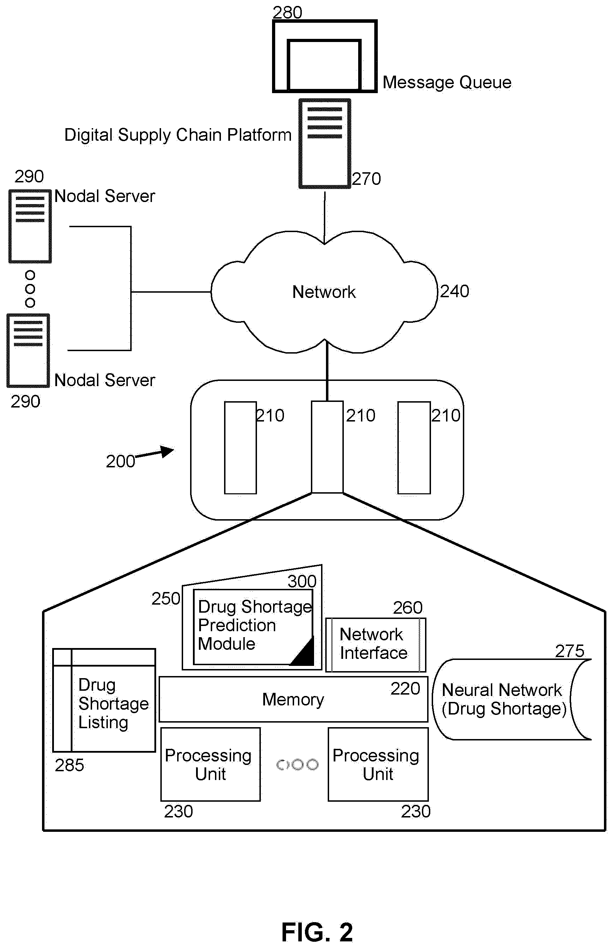

Aspects of the process described in connection with Figure 1 can be implemented within a data processing system. In further illustration, Figure 2 schematically shows a data processing system adapted to perform drug shortage prediction. In the data processing system illustrated in Figure 1, a host computing platform 200 is provided. The host computing platform 200 includes one or more computers 210, each with memory 220 and one or more processing units 230. The computers 210 of the host computing platform (only a single computer shown for the purpose of illustrative simplicity) can be co-located within one another and in communication with one another over a local area network, or over a data communications bus, or the computers can be remotely disposed from one another and in communication with one another through network interface 260 over a data communications network 240.

The host computing platform 200 is communicatively coupled over the data communications network 240 to a digital supply chain platform 270. The digital supply chain platform 270 provides a network through which participating actors in a pharmaceutical supply chain represented by computing nodes 290 communicatively coupled to the digital supply chain platform over the data communications network 240 exchange information regarding the movement and transaction of drugs in the pharmaceutical supply chain. To that end, the digital supply chain platform 270 provides a message queue 280 through which the different nodes 290 of the pharmaceutical supply chain post and view transactional messages relating to the movement of drugs through the pharmaceutical supply chain. In support of the exchange of information, messages in the message queue 280 include a reference to an NDC and also a transaction type so that ones of the messages in the message queue 280 are able to be filtered according to those messages pertaining to a change in custody of a particular label of a drug implicated by an encapsulated NDC.

Notably, at least one of the computers 210 includes a computing device 250 having a non-transitory computer readable storage medium which can be accessed by the processing units 230 of one or more of the computers 210. The computing device 250 stores thereon or retains therein a program module 300 that includes computer program instructions which when executed by one or more of the processing units 230, performs a programmatically executable process for drug shortage prediction. Specifically, the program instructions during execution train a deep neural network 270 with training data of a set of transactions implicated by observed messages in the message queue 280 and referencing specific labels of a drug, which, after a lapsed period of time, had been included in a drug shortage listing 285. The program instructions further are enabled to observe a contemporary set of transactions in the message queue 280 relating to the change in custody of different labels of different drugs, and to submit the contemporary set to the neural network 275 in order to receive in return a prediction as to the likelihood of a drug shortage occurring on a specified date in the future as trained.

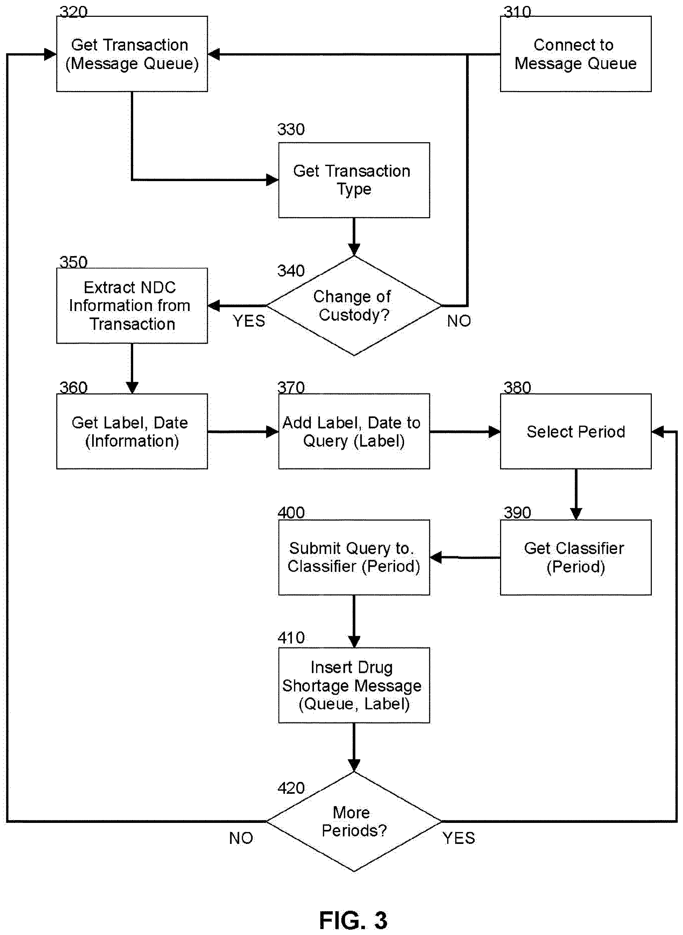

In further illustration of an exemplary operation of the module, Figure 3 is a flow chart illustrating one of the aspects of the process of Figure 1. Beginning in block 310, the drug shortage prediction module connects with the message queue of a digital supply chain platform and in block 320, the drug shortage prediction module receives a transaction posted in the message queue. In block 330, a transaction type is identified for the transaction and in block 340, it is determined if the transaction reflects a change of custody for a particular label. If not, the transaction is discarded by the drug shortage prediction module and the drug shortage prediction module receives a next transaction in the message queue. But otherwise, the process continues through block 350.

In block 350, NDC information is extracted from the transaction and in block 360, the drug shortage prediction module identifies from the NDC information, the drug label and quantity and a date of the transaction. The drug shortage prediction module in block 370 then adds the identified drug label, quantity and date to a query for submission to a classifier. First, however, in block 380 a number of days into the future is selected as a classifier period and in block 390, a classifier is selected corresponding to the selected number of days. As such, in block 400 the drug shortage prediction module submits the query to the selected classifier.

In decision block 410, a message is posted onto the message queue of the digital supply chain platform indicating a likelihood of a predicted drug shortage on the date occurring the. number of days into the future. Thereafter, in decision block 420 it is determined whether or not an additional classifier period is selected. If so, the process returns to block 380 with the selection of the additional classifier period and the retrieval of the classifier in block 390 for the additional classifier period and the submission of the query to the newly retrieved classifier. In this way, for the extracted NDC information, a prediction is produced as to the likelihood of a drug shortage for the corresponding label at each horizon date of the selected classifier periods. When no further periods are selected for prediction, the process returns to block 320 with the retrieval of a next transaction in the message queue.

Of import, the foregoing flowchart and block diagram referred to herein illustrate the architecture, functionality, and operation of possible implementations of systems, methods, and computing devices according to various embodiments of the present invention. In this regard, each block in the flowchart or block diagrams may represent a module, segment, or portion of instructions, which includes one or more executable instructions for implementing the specified logical function or functions. In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

More specifically, the present invention may be embodied as a programmatically executable process. As well, the present invention may be embodied within a computing device upon which programmatic instructions are stored and from which the programmatic instructions are enabled to be loaded into memory of a data processing system and executed therefrom in order to perform the foregoing programmatically executable process. Even further, the present invention may be embodied within a data processing system adapted to load the programmatic instructions from a computing device and to then execute the programmatic instructions in order to perform the foregoing programmatically executable process.

To that end, the computing device is a non-transitory computer readable storage medium or media retaining therein or storing thereon computer readable program instructions. These instructions, when executed from memory by one or more processing units of a data processing system, cause the processing units to perform different programmatic processes exemplary of different aspects of the programmatically executable process. In this regard, the processing units each include an instruction execution device such as a central processing unit or "CPU" of a computer. One or more computers may be included within the data processing system. Of note, while the CPU can be a single core CPU, it will be understood that multiple CPU cores can operate within the CPU and in either instance, the instructions are directly loaded from memory into one or more of the cores of one or more of the CPUs for execution.

Aside from the direct loading of the instructions from memory for execution by one or more cores of a CPU or multiple CPUs, the computer readable program instructions described herein alternatively can be retrieved from over a computer communications network into the memory of a computer of the data processing system for execution therein. As well, only a portion of the program instructions may be retrieved into the memory from over the computer communications network, while other portions may be loaded from persistent storage of the computer. Even further, only a portion of the program instructions may execute by one or more processing cores of one or more CPUs of one of the computers of the data processing system, while other portions may cooperatively execute within a different computer of the data processing system that is either co-located with the computer or positioned remotely from the computer over the computer communications network with results of the computing by both computers shared therebetween.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description but is not intended to be exhaustive or limited to the invention in the form disclosed. Many modifications and variations will be apparent to those of ordinary skill in the art without departing from the scope of the invention. The embodiment was chosen and described in order to best explain the principles of the invention and the practical application, and to enable others of ordinary skill in the art to understand the invention for various embodiments with various modifications as are suited to the particular use contemplated.

Having thus described the invention of the present application in detail and by reference to embodiments thereof, it will be apparent that modifications and variations are possible without departing from the scope of the invention defined in the appended claims as follows:

## Claims

1. A drug shortage prediction method comprising:
establishing a communicative coupling between a drug shortage prediction module executing by a processor of a host computing device, and a data bus of a digital supply network computing platform supporting supply chain information sharing by different enterprise computing nodes of different corresponding participants to a pharmaceutical supply chain;
defining a classifier data structure in memory of the host computing device;
loading into the memory of the host computing device, a listing of different drug shortage events at different times in association with different drugs;
reading on the data bus, over different periods of time, transactions between ones of the nodes, each of the transactions indicating a receipt of a particular one of the drugs by a particular dispensary;
correlating in the memory of the device ones of the drug shortage events with ones of the transactions at a specified duration of time preceding the drug shortage events and training the classifier with the correlated ones of the transactions annotated as giving rise to the drug shortage events when the correlated ones of the transactions are observed at the specified duration of time preceding the drug shortage events;
querying the classifier with newly observed transactions on the data bus and receiving in response to the querying, a likelihood that a drug shortage event for a specific one of the drugs will occur at the specified duration of time following the newly observed transactions; and,
displaying the likelihood in a user interface presented by the digital supply network computing platform.

2. The method of claim 1, wherein the data bus is a message queue processing messages between the different enterprise computing nodes of the digital supply network platform.

3. The method of claim 1, wherein the classifier is a decision tree model.

4. The method of claim 1, further comprising:
additionally correlating in the memory of the device additional ones of the drug shortage events with additional ones of the transactions at a different duration of time preceding the drug shortage events and training the classifier with the additionally correlated ones of the additional ones of the transactions annotated as giving rise to the drug shortage events when the additionally correlated ones of the additional ones of the transactions are observed at the different duration of time preceding the drug shortage events;
wherein the querying of the classifier with newly observed transactions on the data bus results in a receipt of a likelihood that a drug shortage event will occur at either the specified duration of time following the newly observed transactions or at the different duration of time following the newly observed transactions.

5. The method of claim 1, wherein each corresponding one of the different drugs is represented in the listing by a national drug code (NDC) specifying a labeler of the corresponding one of the different drugs, an identity of the corresponding one of the different drugs and a quantity of the corresponding one of the different drugs in a related packaging.

6. A data processing system adapted for drug shortage prediction, the system comprising:
a host computing platform comprising one or more computers, each with memory and one or processing units including one or more processing cores;
a digital supply network computing platform supporting supply chain information sharing by different enterprise computing nodes of different corresponding participants to a pharmaceutical supply chain;
a data bus provided by the digital supply network computing platform and communicatively coupled to the host computing platform;
a classifier data structure defined in memory of the host computing device and a listing stored in the memory of different drug shortage events at different times in association with different drugs; and,
a drug shortage prediction module executing by the one or more processing units and comprising computer program instructions enabled during execution to perform:
reading on the data bus, over different periods of time, transactions between ones of the nodes, each of the transactions indicating a receipt of a particular one of the drugs by a particular dispensary;
correlating in the memory of the device ones of the drug shortage events with ones of the transactions at a specified duration of time preceding the drug shortage events and training the classifier with the correlated ones of the transactions annotated as giving rise to the drug shortage events when the correlated ones of the transactions are observed at the specified duration of time preceding the drug shortage events;
querying the classifier with newly observed transactions on the data bus and receiving in response to the querying, a likelihood that a drug shortage event for a specific one of the drugs will occur at the specified duration of time following the newly observed transactions; and,
displaying the likelihood in a user interface presented by the digital supply network computing platform.

7. The system of claim 6, wherein the data bus is a message queue processing messages between the different enterprise computing nodes of the digital supply network platform.

8. The system of claim 6, wherein the classifier is a decision tree model.

9. The system of claim 6, wherein the program instructions are further enabled to perform:
additionally correlating in the memory of the device additional ones of the drug shortage events with additional ones of the transactions at a different duration of time preceding the drug shortage events and training the classifier with the additionally correlated ones of the additional ones of the transactions annotated as giving rise to the drug shortage events when the additionally correlated ones of the additional ones of the transactions are observed at the different duration of time preceding the drug shortage events;
wherein the querying of the classifier with newly observed transactions on the data bus results in a receipt of a likelihood that a drug shortage event will occur at either the specified duration of time following the newly observed transactions or at the different duration of time following the newly observed transactions.

10. The system of claim 6, wherein each corresponding one of the different drugs is represented in the listing by a national drug code (NDC) specifying a labeler of the corresponding one of the different drugs, an identity of the corresponding one of the different drugs and a quantity of the corresponding one of the different drugs in a related packaging.

11. A computing device comprising a non-transitory computer readable storage medium having program instructions stored therein, the instructions being executable by at least one processing core of a processing unit to cause the processing unit to perform drug shortage prediction by:
establishing a communicative coupling between a drug shortage prediction module executing by a processor of a host computing device, and a data bus of a digital supply network computing platform supporting supply chain information sharing by different enterprise computing nodes of different corresponding participants to a pharmaceutical supply chain;
defining a classifier data structure in memory of the host computing device;
loading into the memory of the host computing device, a listing of different drug shortage events at different times in association with different drugs;
reading on the data bus, over different periods of time, transactions between ones of the nodes, each of the transactions indicating a receipt of a particular one of the drugs by a particular dispensary;
correlating in the memory of the device ones of the drug shortage events with ones of the transactions at a specified duration of time preceding the drug shortage events and training the classifier with the correlated ones of the transactions annotated as giving rise to the drug shortage events when the correlated ones of the transactions are observed at the specified duration of time preceding the drug shortage events;
querying the classifier with newly observed transactions on the data bus and receiving in response to the querying, a likelihood that a drug shortage event for a specific one of the drugs will occur at the specified duration of time following the newly observed transactions; and,
displaying the likelihood in a user interface presented by the digital supply network computing platform.

12. The device of claim 11, wherein the data bus is a message queue processing messages between the different enterprise computing nodes of the digital supply network platform.

13. The device of claim 11, wherein the classifier is a decision tree model.

14. The device of claim 11, wherein the program instructions further perform:
additionally correlating in the memory of the device additional ones of the drug shortage events with additional ones of the transactions at a different duration of time preceding the drug shortage events and training the classifier with the additionally correlated ones of the additional ones of the transactions annotated as giving rise to the drug shortage events when the additionally correlated ones of the additional ones of the transactions are observed at the different duration of time preceding the drug shortage events;
wherein the querying of the classifier with newly observed transactions on the data bus results in a receipt of a likelihood that a drug shortage event will occur at either the specified duration of time following the newly observed transactions or at the different duration of time following the newly observed transactions.

15. The device of claim 11, wherein each corresponding one of the different drugs is represented in the listing by a national drug code (NDC) specifying a labeler of the corresponding one of the different drugs, an identity of the corresponding one of the different drugs and a quantity of the corresponding one of the different drugs in a related packaging.

## Patentansprüche

1. Verfahren zur Vorhersage von Arzneimittelengpässen, welches umfasst:
Herstellen einer Kommunikationsverbindung zwischen einem Modul zur Vorhersage von Arzneimittelengpässen, das von einem Prozessor eines Host-Rechners ausgeführt wird, und einem Datenbus einer digitalen Versorgungsnetzwerk-Rechenplattform, die den Austausch von Lieferketteninformationen zwischen verschiedenen Unternehmens-Rechenknoten verschiedener Teilnehmer einer pharmazeutischen Lieferkette unterstützt;
Definieren einer Klassifikator-Datenstruktur im Speicher des Host-Rechners;
Laden einer Liste verschiedener Arzneimittelengpassereignisse zu unterschiedlichen Zeitpunkten in Verbindung mit verschiedenen Arzneimitteln in den Speicher des Host-Rechners;
Auslesen von Transaktionen zwischen den Knoten über den Datenbus über verschiedene Zeiträume hinweg, wobei jede der Transaktionen den Erhalt eines bestimmten Arzneimittels durch eine bestimmte Apotheke anzeigt;
Korrelieren bestimmter Arzneimittelengpässe im Speicher des Rechners mit bestimmten Transaktionen in einem festgelegten Zeitraum vor den Arzneimittelengpässen und Trainieren des Klassifikators mit den korrelierten Transaktionen, die als Ursache für die Arzneimittelengpässe gekennzeichnet sind, wenn die korrelierten Transaktionen in dem festgelegten Zeitraum vor den Arzneimittelengpässen beobachtet werden;
Abfragen des Klassifikators mit neu beobachteten Transaktionen auf dem Datenbus und Empfangen einer Wahrscheinlichkeit als Antwort auf die Abfrage, dass ein Arzneimittelengpass für ein bestimmtes Arzneimittel innerhalb eines festgelegten Zeitraums nach den neu beobachteten Transaktionen eintreten wird; und
Anzeigen der Wahrscheinlichkeit in einer Benutzeroberfläche, die von der Rechenplattform des digitalen Liefernetzwerks bereitgestellt wird.

2. Verfahren nach Anspruch 1, worin der Datenbus eine Nachrichtenwarteschlange ist, die Nachrichten zwischen den verschiedenen Unternehmens-Rechenknoten der Plattform des digitalen Versorgungsnetzwerks verarbeitet.

3. Verfahren nach Anspruch 1, worin der Klassifikator ein Entscheidungsbaummodell ist.

4. Verfahren nach Anspruch 1, welches ferner umfasst:
zusätzliches Korrelieren weiterer der Arzneimittelengpassereignisse mit weiteren der Transaktionen in einem anderen Zeitabschnitt vor den Arzneimittelengpassereignissen im Speicher des Rechners und Trainieren des Klassifikators mit den zusätzlich korrelierten der weiteren Transaktionen, die als Ursache für die Arzneimittelengpassereignisse gekennzeichnet sind, wenn die zusätzlich korrelierten der weiteren Transaktionen in dem anderen Zeitabschnitt vor den Arzneimittelengpassereignissen beobachtet werden;
wobei die Abfrage des Klassifikators mit neu beobachteten Transaktionen auf dem Datenbus zu einer Wahrscheinlichkeit führt, dass ein Arzneimittelengpassereignis entweder zu dem festgelegten Zeitpunkt nach den neu beobachteten Transaktionen oder zu dem anderen Zeitpunkt nach den neu beobachteten Transaktionen eintreten wird.

5. Verfahren nach Anspruch 1, worin jedes der verschiedenen Arzneimittel in der Liste durch einen nationalen Arzneimittelencode (NDC) dargestellt wird, der einen Hersteller des jeweiligen Arzneimittels, eine Identität des jeweiligen Arzneimittels und eine Menge des jeweiligen Arzneimittels in einer zugehörigen Verpackung angibt.

6. Datenverarbeitungssystem, das zur Vorhersage von Arzneimittelengpässen ausgelegt ist, wobei das System umfasst:
eine Host-Rechenplattform, die einen oder mehrere Computer umfasst, von denen jeder über einen Speicher und eine oder mehrere Recheneinheiten mit einem oder mehreren Rechenkernen verfügt;
eine Rechenplattform für ein digitales Lieferkettennetzwerk, die den Austausch von Lieferketteninformationen zwischen verschiedenen Unternehmens-Rechenknoten unterschiedlicher Teilnehmer einer pharmazeutischen Lieferkette unterstützt;
einen Datenbus, der von der Rechenplattform für das digitale Lieferkettennetzwerk bereitgestellt wird und kommunikativ mit der Host-Rechenplattform verbunden ist;
eine Klassifikator-Datenstruktur, die im Speicher des Host-Rechners definiert ist, und eine im Speicher gespeicherte Auflistung verschiedener Arzneimittelengpässe zu unterschiedlichen Zeitpunkten in Verbindung mit verschiedenen Arzneimitteln; und
ein Modul zur Vorhersage von Arzneimittelengpässen, das von der einen oder den mehreren Verarbeitungseinheiten ausgeführt wird und Computerprogrammbefehle umfasst, die während der Ausführung aktiviert werden, um Folgendes auszuführen:
Lesen von Transaktionen zwischen den Knoten über den Datenbus über verschiedene Zeiträume hinweg, wobei jede der Transaktionen den Erhalt eines bestimmten Arzneimittels durch eine bestimmte Apotheke anzeigt;
Korrelieren von Ereignissen des Arzneimittelengpasses im Speicher des Rechners mit Transaktionen, die zu einem bestimmten Zeitpunkt vor den Ereignissen des Arzneimittelengpasses stattfanden, und Trainieren des Klassifikators mit den korrelierten Transaktionen, die als Ursache für die Ereignisse des Arzneimittelengpasses gekennzeichnet sind, wenn die korrelierten Transaktionen zu dem bestimmten Zeitpunkt vor den Ereignissen des Arzneimittelengpasses beobachtet werden;
Abfragen des Klassifikators mit neu beobachteten Transaktionen auf dem Datenbus und Empfangen einer Wahrscheinlichkeit als Antwort auf die Abfrage, dass ein Arzneimittelengpassereignis für ein bestimmtes Arzneimittel in dem festgelegten Zeitraum nach den neu beobachteten Transaktionen eintreten wird; und
Anzeigen der Wahrscheinlichkeit in einer Benutzeroberfläche, die von der Rechenplattform des digitalen Liefernetzwerks bereitgestellt wird.

7. System nach Anspruch 6, worin der Datenbus eine Nachrichtenwarteschlange ist, die Nachrichten zwischen den verschiedenen Unternehmens-Rechenknoten der digitalen Versorgungsnetzwerkplattform verarbeitet.

8. System nach Anspruch 6, worin der Klassifikator ein Entscheidungsbaummodell ist.

9. System nach Anspruch 6, worin die Programmbefehle ferner dazu ausgelegt sind, Folgendes auszuführen:
zusätzliches Korrelieren weiterer der Arzneimittelengpassereignisse mit weiteren der Transaktionen in einem anderen Zeitabschnitt vor den Arzneimittelengpassereignissen im Speicher des Rechners und Trainieren des Klassifikators mit den zusätzlich korrelierten der weiteren Transaktionen, die als Ursache für die Arzneimittelengpassereignisse gekennzeichnet sind, wenn die zusätzlich korrelierten der weiteren Transaktionen in dem anderen Zeitabschnitt vor den Arzneimittelengpassereignissen beobachtet werden;
wobei die Abfrage des Klassifikators mit neu beobachteten Transaktionen auf dem Datenbus zu einer Wahrscheinlichkeit führt, dass ein Arzneimittelengpassereignis entweder zu dem festgelegten Zeitpunkt nach den neu beobachteten Transaktionen oder zu dem anderen Zeitpunkt nach den neu beobachteten Transaktionen eintreten wird.

10. System nach Anspruch 6, worin jedes der verschiedenen Arzneimittel in der Liste durch einen nationalen Arzneimittelcode (NDC) dargestellt ist, der einen Hersteller des jeweiligen Arzneimittels, eine Identität des jeweiligen Arzneimittels und eine Menge des jeweiligen Arzneimittels in einer zugehörigen Verpackung angibt.

11. Rechner, welcher ein nichtflüchtiges, computerlesbares Speichermedium umfasst, auf dem Programmbefehle gespeichert sind, wobei die Befehle von mindestens einem Prozessorkern einer Verarbeitungseinheit ausgeführt werden können, um die Verarbeitungseinheit dazu zu veranlassen, eine Vorhersage von Arzneimittelengpässen durchzuführen, indem:
Herstellen einer Kommunikationsverbindung zwischen einem Modul zur Vorhersage von Arzneimittelengpässen, das von einem Prozessor eines Host-Rechners ausgeführt wird, und einem Datenbus einer digitalen Versorgungsnetzwerk-Rechenplattform, die den Austausch von Lieferketteninformationen zwischen verschiedenen Unternehmens-Rechenknoten verschiedener Teilnehmer einer pharmazeutischen Lieferkette unterstützt;
Definieren einer Klassifikator-Datenstruktur im Speicher des Host-Rechners;
Laden einer Liste verschiedener Arzneimittelengpassereignisse zu unterschiedlichen Zeitpunkten in Verbindung mit verschiedenen Arzneimitteln in den Speicher des Host-Rechners;
Auslesen von Transaktionen zwischen den Knoten über den Datenbus über verschiedene Zeiträume hinweg, wobei jede der Transaktionen den Erhalt eines bestimmten Arzneimittels durch eine bestimmte Apotheke anzeigt;
Korrelieren bestimmter Arzneimittelengpässe im Speicher des Rechners mit bestimmten Transaktionen in einem festgelegten Zeitraum vor den Arzneimittelengpässen und Trainieren des Klassifikators mit den korrelierten Transaktionen, die als Ursache für die Arzneimittelengpässe gekennzeichnet sind, wenn die korrelierten Transaktionen in dem festgelegten Zeitraum vor den Arzneimittelengpässen beobachtet werden;
Abfragen des Klassifikators mit neu beobachteten Transaktionen auf dem Datenbus und Empfangen einer Wahrscheinlichkeit als Antwort auf die Abfrage, dass ein Arzneimittelengpass für ein bestimmtes Arzneimittel innerhalb eines festgelegten Zeitraums nach den neu beobachteten Transaktionen eintreten wird; und
Anzeigen der Wahrscheinlichkeit in einer Benutzeroberfläche, die von der Rechenplattform des digitalen Liefernetzwerks bereitgestellt wird.

12. Rechner nach Anspruch 11, worin der Datenbus eine Nachrichtenwarteschlange ist, die Nachrichten zwischen den verschiedenen Unternehmens-Rechenknoten der Plattform des digitalen Versorgungsnetzwerks verarbeitet.

13. Rechner nach Anspruch 11, worin der Klassifikator ein Entscheidungsbaummodell ist.

14. Rechner nach Anspruch 11, wobei die Programmbefehle ferner folgende Schritte ausführen:
zusätzliches Korrelieren weiterer der Arzneimittelengpassereignisse mit weiteren der Transaktionen in einem anderen Zeitabschnitt vor den Arzneimittelengpassereignissen im Speicher des Rechners und Trainieren des Klassifikators mit den zusätzlich korrelierten der weiteren Transaktionen, die als Ursache für die Arzneimittelengpassereignisse gekennzeichnet sind, wenn die zusätzlich korrelierten der weiteren Transaktionen in dem anderen Zeitabschnitt vor den Arzneimittelengpassereignissen beobachtet werden;
wobei die Abfrage des Klassifikators mit neu beobachteten Transaktionen auf dem Datenbus zu einer Wahrscheinlichkeit führt, dass ein Arzneimittelengpassereignis entweder zu dem festgelegten Zeitpunkt nach den neu beobachteten Transaktionen oder zu dem anderen Zeitpunkt nach den neu beobachteten Transaktionen eintreten wird.

15. Rechner nach Anspruch 11, worin jedes der verschiedenen Arzneimittel in der Liste durch einen nationalen Arzneimittelcode (NDC) dargestellt ist, der einen Hersteller des jeweiligen Arzneimittels, eine Identität des jeweiligen Arzneimittels und eine Menge des jeweiligen Arzneimittels in einer zugehörigen Verpackung angibt.

## Revendications

1. Procédé de prédiction de pénurie de médicaments comprenant :
l'établissement d'un couplage communicatif entre un module de prédiction de pénurie de médicaments s'exécutant par un processeur d'un dispositif informatique hôte, et un bus de données d'une plateforme informatique de réseau d'approvisionnement numérique supportant le partage d'informations de chaîne d'approvisionnement par différents nœuds informatiques d'entreprise de différents participants correspondants à une chaîne d'approvisionnement pharmaceutique ;
la définition d'une structure de données de classifieur dans une mémoire du dispositif informatique hôte ;
le chargement dans la mémoire du dispositif informatique hôte, d'une liste de différents événements de pénurie de médicaments à différents instants en association avec différents médicaments ;
la lecture sur le bus de données, sur différentes périodes de temps, de transactions entre certains des nœuds, chacune des transactions indiquant une réception d'un médicament particulier parmi les médicaments par une officine particulière ;
la corrélation dans la mémoire du dispositif de certains des événements de pénurie de médicaments avec certaines des transactions à une durée spécifiée de temps précédant les événements de pénurie de médicaments et l'entraînement du classifieur avec les transactions corrélées annotées comme donnant lieu aux événements de pénurie de médicaments lorsque les transactions corrélées sont observées à la durée spécifiée de temps précédant les événements de pénurie de médicaments ;
l'interrogation du classifieur avec des transactions nouvellement observées sur le bus de données et la réception en réponse à l'interrogation, d'une probabilité qu'un événement de pénurie de médicaments pour un médicament spécifique parmi les médicaments se produise à la durée spécifiée de temps suivant les transactions nouvellement observées ; et
l'affichage de la probabilité dans une interface utilisateur présentée par la plateforme informatique de réseau d'approvisionnement numérique.

2. Procédé selon la revendication 1, dans lequel le bus de données est une file d'attente de messages traitant des messages entre les différents nœuds informatiques d'entreprise de la plateforme de réseau d'approvisionnement numérique.

3. Procédé selon la revendication 1, dans lequel le classifieur est un modèle d'arbre de décision.

4. Procédé selon la revendication 1, comprenant en outre :
la corrélation supplémentaire dans la mémoire du dispositif d'événements de pénurie de médicaments supplémentaires parmi les événements de pénurie de médicaments avec des transactions supplémentaires parmi les transactions à une durée de temps différente précédant les événements de pénurie de médicaments et l'entraînement du classifieur avec les transactions supplémentaires corrélées supplémentairement annotées comme donnant lieu aux événements de pénurie de médicaments lorsque les transactions supplémentaires corrélées supplémentairement sont observées à la durée de temps différente précédant les événements de pénurie de médicaments ;
dans lequel l'interrogation du classifieur avec des transactions nouvellement observées sur le bus de données résulte en une réception d'une probabilité qu'un événement de pénurie de médicaments se produise soit à la durée spécifiée de temps suivant les transactions nouvellement observées soit à la durée de temps différente suivant les transactions nouvellement observées.

5. Procédé selon la revendication 1, dans lequel chaque médicament correspondant parmi les différents médicaments est représenté dans la liste par un code national de médicament (NDC) spécifiant un étiqueteur du médicament correspondant parmi les différents médicaments, une identité du médicament correspondant parmi les différents médicaments et une quantité du médicament correspondant parmi les différents médicaments dans un conditionnement associé.

6. Système de traitement de données adapté pour la prédiction de pénurie de médicaments, le système comprenant :
une plateforme informatique hôte comprenant un ou plusieurs ordinateurs, chacun avec une mémoire et une ou plusieurs unités de traitement incluant un ou plusieurs cœurs de traitement ;
une plateforme informatique de réseau d'approvisionnement numérique supportant le partage d'informations de chaîne d'approvisionnement par différents nœuds informatiques d'entreprise de différents participants correspondants à une chaîne d'approvisionnement pharmaceutique ;
un bus de données fourni par la plateforme informatique de réseau d'approvisionnement numérique et couplé en communication à la plateforme informatique hôte ;
une structure de données de classifieur définie dans une mémoire du dispositif informatique hôte et une liste stockée dans la mémoire de différents événements de pénurie de médicaments à différents instants en association avec différents médicaments ; et
un module de prédiction de pénurie de médicaments s'exécutant par la ou les unités de traitement et comprenant des instructions de programme informatique activées pendant l'exécution pour effectuer :
la lecture sur le bus de données, sur différentes périodes de temps, de transactions entre certains des nœuds, chacune des transactions indiquant une réception d'un médicament particulier parmi les médicaments par une officine particulière ;
la corrélation dans la mémoire du dispositif de certains des événements de pénurie de médicaments avec certaines des transactions à une durée spécifiée de temps précédant les événements de pénurie de médicaments et l'entraînement du classifieur avec les transactions corrélées annotées comme donnant lieu aux événements de pénurie de médicaments lorsque les transactions corrélées sont observées à la durée spécifiée de temps précédant les événements de pénurie de médicaments ;
l'interrogation du classifieur avec des transactions nouvellement observées sur le bus de données et la réception en réponse à l'interrogation, d'une probabilité qu'un événement de pénurie de médicaments pour un médicament spécifique parmi les médicaments se produise à la durée spécifiée de temps suivant les transactions nouvellement observées ; et
l'affichage de la probabilité dans une interface utilisateur présentée par la plateforme informatique de réseau d'approvisionnement numérique.

7. Système selon la revendication 6, dans lequel le bus de données est une file d'attente de messages traitant des messages entre les différents nœuds informatiques d'entreprise de la plateforme de réseau d'approvisionnement numérique.

8. Système selon la revendication 6, dans lequel le classifieur est un modèle d'arbre de décision.

9. Système selon la revendication 6, dans lequel les instructions de programme sont en outre activées pour effectuer :
la corrélation supplémentaire dans la mémoire du dispositif d'événements de pénurie de médicaments supplémentaires parmi les événements de pénurie de médicaments avec des transactions supplémentaires parmi les transactions à une durée de temps différente précédant les événements de pénurie de médicaments et l'entraînement du classifieur avec les transactions supplémentaires corrélées supplémentairement annotées comme donnant lieu aux événements de pénurie de médicaments lorsque les transactions supplémentaires corrélées supplémentairement sont observées à la durée de temps différente précédant les événements de pénurie de médicaments ;
dans lequel l'interrogation du classifieur avec des transactions nouvellement observées sur le bus de données résulte en une réception d'une probabilité qu'un événement de pénurie de médicaments se produise soit à la durée spécifiée de temps suivant les transactions nouvellement observées soit à la durée de temps différente suivant les transactions nouvellement observées.

10. Système selon la revendication 6, dans lequel chaque médicament correspondant parmi les différents médicaments est représenté dans la liste par un code national de médicament (NDC) spécifiant un étiqueteur du médicament correspondant parmi les différents médicaments, une identité du médicament correspondant parmi les différents médicaments et une quantité du médicament correspondant parmi les différents médicaments dans un conditionnement associé.

11. Dispositif informatique comprenant un support de stockage non transitoire lisible par ordinateur contenant des instructions de programme stockées en son sein, les instructions étant exécutables par au moins un cœur de traitement d'une unité de traitement pour amener l'unité de traitement à effectuer une prédiction de pénurie de médicaments par :
l'établissement d'un couplage communicatif entre un module de prédiction de pénurie de médicaments s'exécutant par un processeur d'un dispositif informatique hôte, et un bus de données d'une plateforme informatique de réseau d'approvisionnement numérique supportant le partage d'informations de chaîne d'approvisionnement par différents nœuds informatiques d'entreprise de différents participants correspondants à une chaîne d'approvisionnement pharmaceutique ;
la définition d'une structure de données de classifieur dans une mémoire du dispositif informatique hôte ;
le chargement dans la mémoire du dispositif informatique hôte, d'une liste de différents événements de pénurie de médicaments à différents instants en association avec différents médicaments ;
la lecture sur le bus de données, sur différentes périodes de temps, de transactions entre certains des nœuds, chacune des transactions indiquant une réception d'un médicament particulier parmi les médicaments par une officine particulière ;
la corrélation dans la mémoire du dispositif de certains des événements de pénurie de médicaments avec certaines des transactions à une durée spécifiée de temps précédant les événements de pénurie de médicaments et l'entraînement du classifieur avec les transactions corrélées annotées comme donnant lieu aux événements de pénurie de médicaments lorsque les transactions corrélées sont observées à la durée spécifiée de temps précédant les événements de pénurie de médicaments ;
l'interrogation du classifieur avec des transactions nouvellement observées sur le bus de données et la réception en réponse à l'interrogation, d'une probabilité qu'un événement de pénurie de médicaments pour un médicament spécifique parmi les médicaments se produise à la durée spécifiée de temps suivant les transactions nouvellement observées ; et
l'affichage de la probabilité dans une interface utilisateur présentée par la plateforme informatique de réseau d'approvisionnement numérique.

12. Dispositif selon la revendication 11, dans lequel le bus de données est une file d'attente de messages traitant des messages entre les différents nœuds informatiques d'entreprise de la plateforme de réseau d'approvisionnement numérique.

13. Dispositif selon la revendication 11, dans lequel le classifieur est un modèle d'arbre de décision.

14. Dispositif selon la revendication 11, dans lequel les instructions de programme effectuent en outre :
la corrélation supplémentaire dans la mémoire du dispositif d'événements de pénurie de médicaments supplémentaires parmi les événements de pénurie de médicaments avec des transactions supplémentaires parmi les transactions à une durée de temps différente précédant les événements de pénurie de médicaments et l'entraînement du classifieur avec les transactions supplémentaires corrélées supplémentairement annotées comme donnant lieu aux événements de pénurie de médicaments lorsque les transactions supplémentaires corrélées supplémentairement sont observées à la durée de temps différente précédant les événements de pénurie de médicaments ;
dans lequel l'interrogation du classifieur avec des transactions nouvellement observées sur le bus de données résulte en une réception d'une probabilité qu'un événement de pénurie de médicaments se produise soit à la durée spécifiée de temps suivant les transactions nouvellement observées soit à la durée de temps différente suivant les transactions nouvellement observées.

15. Dispositif selon la revendication 11, dans lequel chaque médicament correspondant parmi les différents médicaments est représenté dans la liste par un code national de médicament (NDC) spécifiant un étiqueteur du médicament correspondant parmi les différents médicaments, une identité du médicament correspondant parmi les différents médicaments et une quantité du médicament correspondant parmi les différents médicaments dans un conditionnement associé.
